# EUROPEAN PATENT APPLICATION

(11) **EP 4 335 992 A1**
(43) Date of publication of application: **13.03.2024**
(21) Application number: 22382829.4
(22) Date of filing: 06.09.2022
(51) Int. Cl.: E04H 4/12, F16L 19/02, F16L 19/025

(54) **SELECTOR VALVE FOR SWIMMING POOL FILTER UNITS**

(71) Applicant: Cepex, S.A.U., 08400 Granollers (Barcelona) (ES)
(72) Inventor: GIRBAU FORNS, Josep, 08400 Granollers (Barcelona) (ES); TORAL GÓMEZ, Alejandro, 08400 Granollers (Barcelona) (ES)
(74) Representative: Herrero & Asociados, S.L.

(57) **Abstract**

Selector valve for filter units, linkable to a swimming pool filter, comprising a valve body (1), with inlet/outlet ports (5) for water flow; a connection to the filter inlet (2); and a connection pipe (3) to the filter outlet, for fluid connection of the filter interior with the valve body (1), comprising a first end (8) linkable to the filter and a second end (9), insertable in a corresponding port (5). The selector valve further comprises an external adapter piece (4) for connecting the second end (9) to the inside of the port (5), wherein the external adapter piece (4) is a cylindrical body that surrounds and externally embraces the second end (9) and comprises a continuous threaded external surface complementary to the internal threaded surface (7) of the port (5).

## Description

### Object of the invention

The present invention falls within the technical field of multi-port valves, more specifically in the field of housing structures for such valves and relates in particular to a selector valve for filtering units. The selector valve finds particular application in the case of water purification devices for residential swimming pools.

### Background to the invention

Selector valves are a basic component of filters for the purification of residential swimming pool water, as they allow the precise function to be selected at any given moment: filtration, emptying, closing, washing, recirculation and rinsing. They are also called multi-way valves because their internal design allows them to distribute the water between the different inlets and outlets. Manual selector valves are the most common type and comprise a selection handle or lever which, when turned, produces the function changes indicated.

The selector valves are connected to the filter of the purifier, which is where the physical cleaning of the pool water takes place. In addition to the filter, a selector valve must be connected to at least the drain, the pump and the return to the pool. An actuator is located at the top of the valve that determines the path of the water, directing it to the different zones through the corresponding connections. This actuator can be a manually operated handle or an automatic actuator.

For the purification process to be carried out correctly, it is essential that the installation of all the components is done in a precise and durable manner, taking special care in the connection fittings between elements, and more specifically in the connection pipe between the selector valve and the filter outlet. This pipe conducts the freshly filtered flow from inside the filter to the selector valve, so that the latter conducts it to the return of the pool.

Nowadays, this connection is usually made by means of a glue joint between the end of the connection pipe and the corresponding port in the valve body, which usually has a smooth surface for gluing. The glued connection offers greater flexibility when installing the valve to the filter, allowing greater freedom to orient the valve to the filter in the desired position.

On the other hand, glue joining has several disadvantages, such as the fact that it requires a minimum drying time of 1.5 - 2 hours before the pool filter system can be started up. This means that the installer leaves after having installed the filter system but cannot leave it running and cannot check whether the installation has been carried out correctly. Also, if there is a leakage of the valve itself or a malfunction with the glued connection, the glued elements cannot be disassembled and must be disposed of.

In the current state of the art, some selector valves are known with alternative joining systems to gluing. One proposed solution consists of inserting a nut with a sleeve inside the valve body mouth, so that the pipe can be threaded into the body. The main disadvantage is the loss of head that is produced, as the diameter available for the passage of water is considerably reduced. It is also a solution that involves a more complex assembly due to the need to insert the auxiliary connecting piece.

There is therefore a need for a selector valve for filter units that allows a simple and quick connection of the connection pipe to the filter, avoiding the disadvantages of the current state of the art.

### Description of the invention

The object of the invention consists of a selector valve for swimming pool filter units comprising an external adaptor part intended to facilitate the connection with the valve body of one end of the connection pipe to the water purification filter. This connection pipe leads a flow of water from the swimming pool into the filter for purification and subsequent return to the swimming pool basin.

The selector valve basically comprises:
- a valve body, comprising an internal chamber, a plurality of inlet and outlet ports for the water flow, a distributor bell for opening and closing the ports, and a selector actuator for regulating the position of the distributor bell;
- a connection to the filter inlet, for seamless connection between the inner chamber and the filter interior through one of the filter openings;
- a connecting pipe to the filter outlet, for seamless connection between the inside of the filter and the inner chamber through one of the other openings;
- nuts for coupling the valve to the filter by threading the nuts onto the filter ports; and
- an external adapter piece for coupling between one end of the connection pipe with the filter outlet and the corresponding valve body opening.

In a preferred embodiment, each of the inlet and outlet ports of the valve body has a threaded surface to facilitate a threaded coupling with the necessary external connections. In an alternative embodiment, such couplings can be made by gluing.

The external adapter piece consists of two semi-cylindrical adapters which can be coupled together by means of mutual connection means so that, in use and coupled together, they form a cylinder which surrounds and externally embraces the end of the connection pipe with the outlet of the filter intended for coupling with the corresponding inlet port defined in the valve body.

Each of the semi-cylindrical adapters comprises a threaded outer surface. The adapters are not symmetrical with respect to each other and the means of mutual connection are so configured that, although split, the thread resulting from the union of the two adapters has continuity.

In this way, the external adapter piece allows the connection pipe with the filter outlet to be threaded into the corresponding valve body mouth, which, as already mentioned, is equipped with an additional threaded surface, just as if the piece were a monobloc. However, this split-thread configuration greatly facilitates installation, which must be carried out in small spaces where maneuvering is difficult.

Without this external adapter piece in the form of a split thread, it would not be possible to couple nut and adapter in the connecting pipe to the filter outlet, because at least one of the two components would not pass through the ends of the connecting pipe. The split adapter design makes it possible to couple both nut and adapter.

An internal sealing gasket ensures a tight connection between the connection pipe to the filter outlet and the valve body.

The selector valve for filter units described above is a simple and cost-effective solution that overcomes the aforementioned disadvantages of the current state of the art. Its external adapter piece allows an easy, fast and reliable connection, facilitating the installation of a filter unit and without subsequently interfering with the flow. Furthermore, in the event that the connection pipe to the filter outlet needs to be replaced, it can be removed independently of the rest of the elements, without the need to discard all the parts.

An additional advantage is that the external adapter piece in the form of a split thread allows the disassembly of the components (piping, valve body, the adapter piece itself, etc.) for proper recycling. With the traditional glue joint, such disassembly is not possible and recycling of the valve body is prevented.

### Description of the drawings

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows a top perspective view of the selector valve for filtering units of the invention.
Figure 2.- Shows a side view of the selector valve of figure 1.
Figure 3.- Shows a detail of a cross section of the valve shown in figure 2.
Figure 4.- Shows a side view of the piping connecting the valve to the filter outlet.
Figure 5.- Shows a perspective view of an exploded view of the external adapter piece and the connection pipe to the filter outlet.

### Preferred embodiment of the invention

A detailed explanation of an example of a preferred embodiment of the subject matter of the present invention is given below with the aid of the figures referred to above.

The selector valve for swimming pool filter units described is intended to be linked to a filter of a swimming pool purifier to select the required filtering function. The filter comprises at least one inlet and one outlet.

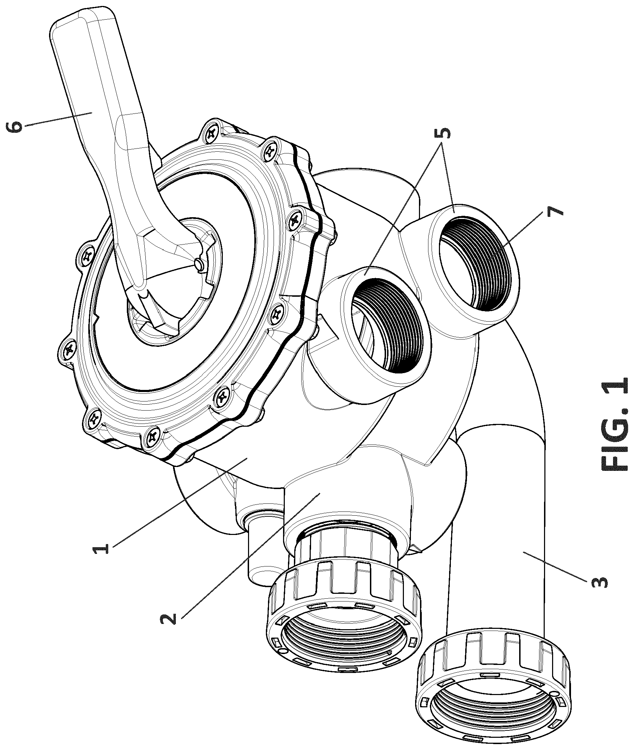

For this purpose, the selector valve, shown in figure 1, comprises a valve body (1), a connection to the filter inlet (2), a connecting pipe (3) to the filter outlet, and an external adapter piece (4) for coupling between one end of the connecting pipe (3) and the valve body (1).

The valve body (1) in turn comprises an internal chamber, a plurality of inlet/outlet ports (5) for the flow of water to/from the interior of the chamber, a distribution bell for opening/closing the ports (5), and an actuator (6). In this preferred embodiment, the actuator (6) consists of a handle for manual operation of the distribution bell.

Each of the ports (5) has a threaded surface (7) defined at the outermost end of its inner face. As shown in the attached figures, in this preferred embodiment, the threaded surface (7) of each of the ports (5) is a female thread.

The connection to the filter inlet (2) seamlessly connects the inner chamber of the valve body (1) to the inside of the filter.

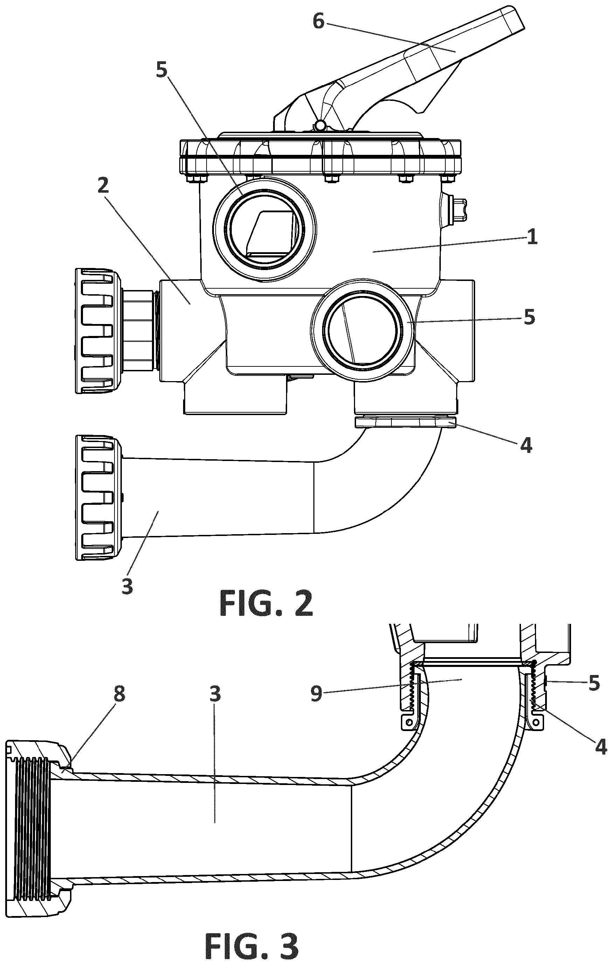

As can be seen in figures 1 and 2, this connection with the filter inlet (2) comprises a straight connection piece through which the water flows, with a male thread to be screwed to the valve body (1), this union being sealed with a flat sealing gasket. It also includes a threaded nut for coupling the valve body (1) with the filter inlet, this union being sealed by means of an O-ring housed in the filter inlet.

The connection pipe (3) with the filter outlet connects the inside of the filter and the internal chamber of the valve body (1) fluidly through one of the ports (5), to allow the flow of water between the filter and the selector valve.

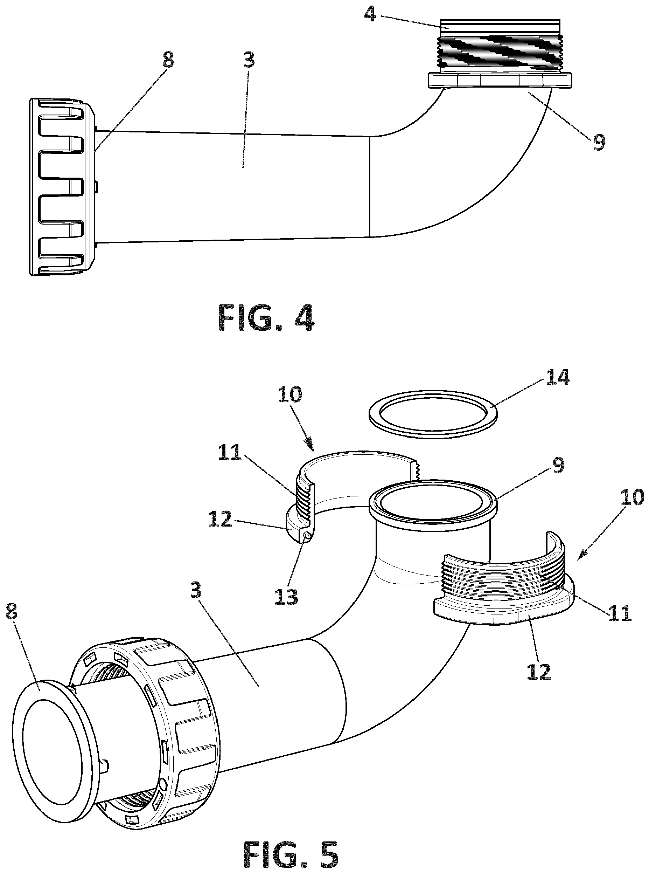

Figures 3-5 illustrate the connection pipe (3), which in this preferred embodiment is curved, since the curvature improves flow and reduces head loss in contrast to the classic angled solution. The connection pipe (3) has a first end (8), which can be connected to the filter, and a second end (9), which can be inserted into a corresponding port (5) of the valve body (1).

The first end (8) comprises an external threaded nut, similar to the one described above for the connection to the filter inlet (2). The external adapter piece (4) links the second end (9) to the inside of the port (5) of the valve body (1) and is a cylindrical body that surrounds and embraces the second end (9).

The external adapter piece (4) consists of two non-symmetrical semi-cylindrical adapters (10) which can be coupled together. Each of the semi-cylindrical adapters (10) comprises a threaded external side face (11), an annular extension (12) defined at one of its bases, and mutual connecting elements (13) for coupling with the corresponding connecting elements (13) of the other semi-cylindrical adapter (10).

As can be seen in the attached figures, in this preferred embodiment, the threaded external side faces (11) are of the male type and the mutual connection elements (13) are a tongue and groove joint made up of nipples and corresponding holes, which also collaborate in the correct mutual positioning of both semi-cylindrical adapters (10) to form the external adapter piece (4).

Thus, the external adapter piece (4) has a threaded external surface resulting from the combination of the threaded external side faces (11) of each of the semi-cylindrical adapters (10) when they are coupled together by means of the connecting elements (13).

As a result of the continuity in the threading of the threaded external side faces (11), a threaded connection of the male threaded external surface of the external adapter piece (4) with the female threaded surface (7) defined in the corresponding port (5) is possible.

The annular extensions (12) facilitate threading by providing an area for manual clamping as well as an optimal geometry for the use of tools should they be required during installation.

An internal flat sealing gasket (14) ensures a tight connection of the second end (9) of the connecting pipe (3) with the valve body (1).

## Claims

1. A selector valve for swimming pool filter units, linkable to a filter of a swimming pool purification device, comprising at least:
- a valve body (1), further comprising:
- an internal chamber;
- a plurality of ports (5) for inlet/outlet of the water flow to/from the interior of the chamber, where each of the ports (5) has an internal threaded surface (7);
- a distribution bell for opening/closing the ports (5); and
- an actuator (6) for actuating the distributor bell;
- a connection to the filter inlet (2) for seamless connection of the inner chamber and the filter interior through a port (5); and
- a connecting pipe (3) to the outlet of the filter, for seamless connection of the inside of the filter to the inner chamber of the valve body (1), comprising:
- a first end (8) linkable to the filter; and
- a second end (9), insertable into a corresponding port (5);
the selector valve being **characterised in that** it additionally comprises an external adapter piece (4) for connecting the second end (9) to the inside of the port (5), wherein the external adapter piece (4) is a cylindrical body which surrounds and externally embraces the second end (9) and which comprises an external threaded surface complementary to the internal threaded surface (7) of the port (5).

2. The selector valve according to claim 1 wherein the external adapter piece (4) comprises two semi-cylindrical adapters (10) which are not symmetrical with respect to each other, each comprising:
- a threaded external side face (11);
- an annular extension (12) defined at one of its bases, and
- mutual connecting elements (13) for coupling with the corresponding connecting elements (13) of the other semi-cylindrical adaptor (10).

3. The selector valve according to any one of the preceding claims, further comprising a flat sealing gasket (14) insertable in the second end (9) of the connection pipe (3) with the filter outlet.
